# EUROPÄISCHE PATENTSCHRIFT

(11) **EP 0 608 295 B1**
(45) Veröffentlichungstag und Bekanntmachung des Hinweises auf die Patenterteilung: **09.06.1999**
(21) Anmeldenummer: 92921261.1
(22) Anmeldetag: 10.10.1992
(51) Int. Cl.: H04N 13/00, H04N 15/00

(54) **VORRICHTUNG ZUR DARSTELLUNG VON DREIDIMENSIONALEN BILDERN**
DEVICE FOR REPRESENTING THREE-DIMENSIONAL IMAGES
DISPOSITIF DE REPRESENTATION D'IMAGES TRIDIMENSIONNELLES

(30) Priorität: 15.10.1991 DE 4134033
(43) Veröffentlichungstag der Anmeldung: 03.08.1994
(73) Patentinhaber: Firma Carl Zeiss, D-73446 Oberkochen (DE)
(72) Erfinder: LUBER, Joachim, D-7087 Essingen (DE); HAEBERLE, Bernd, D-89518 Heidenheim (DE)
(86) Internationale Anmeldenummer: EP9202337
(87) Internationale Veröffentlichungsnummer: WO9308665

(56) Entgegenhaltungen:
- EP-A- 0 253 121
- WO-A-88/10546
- DE-C- 3 808 969
- US-A- 4 562 463
- US-A- 4 772 944

## Beschreibung

Die Erfindung betrifft eine Vorrichtung zur Darstellung von dreidimensionalen Bildern nach dem Oberbegriff des Anspruches 1.

Im Überblicksartikel "Compatible 3-D television: The state of the art" von K. Balasubramonian et al (Proceedings of the SPIE - The International Society for Optical Engineering, Vol. 402, 1983, pp. 100-106) werden verschiedene Wiedergabesysteme zur Darstellung dreidimensionaler Bilder vorgestellt, die mit Hilfe konventioneller TV-Systeme realisiert werden können. Auf Seite 102 dieser Veröffentlichung wird beispielsweise ein System vorgeschlagen, bei dem die getrennten Bilder zweier Kameras mit einem Synchronisiersignal versehen alternierend auf ein kommerzielles Fernsehgerät geschaltet werden, dessen Bildschirm mit einer elektrooptisch schaltbaren Maske versehen ist. Diese wird ebenfalls mit der gleichen Frequenz zwischen zwei Polarisationszuständen alternierend hin und her geschaltet, so daß eine durchgelassene Polarisationsrichtung jeweils dem Bild einer Kamera entspricht. Der Betrachter trägt zur dreidimensionalen Wahrnehmung eine Brille mit entsprechend polarisierten Gläsern, um dem jeweiligen Auge das richtige Bild zuzuordnen. Die Bildverarbeitung und Wiedergabe erfolgt hierbei ohne Zwischenspeicherung, d.h. die eingelesenen Signale der beiden Kameras werden mit der halbierten Bildfrequenz auf den Wiedergabemonitor durchgeschaltet. Dies hat ein Flimmern des Bildes für den Betrachter zur Folge, da die Bildwechselfrequenz bei eingelesenen 50 Hz-Bildern und der daraus resultierenden Auslesefrequenz von 25 Hz unterhalb der kritischen Augenfrequenz von 45 Hz liegt, überhalb der erst eine flimmerfreie Betrachtung möglich wird.

Ein flimmerfreies Bild wird dagegen mit einem System erreicht, das in der deutschen Patentschrift DE 38 08 969 vorgeschlagen wird. Hier werden die Bilder zweier Kameras parallel in zwei getrennten Verarbeitungseinheiten weiterverarbeitet, wobei die Kamerabilder jeweils in einem Vollbildspeicher zwischengespeichert, mit doppelter Bildfrequenz ausgelesen und über einen Umschalter alternierend auf einem Wiedergabegerät dargestellt werden. Mit der Umschaltung der beiden stereoskopischen Teilbilder erfolgt gleichzeitig die Umschaltung von ferroelektrischen Flüssigkristallblenden, die vor dem Auge des Betrachters angeordnet sind. Nachteilig bei diesem System ist die aufwendige parallele Verarbeitung der beiden Kamerabilder. So sind zwei separate Vollbildspeicher, bestehend aus je zwei Halbbildspeichern zur Frequenzverdopplung, sowie zwei Farb-, RGB-Module bzw. Farbencoder erforderlich. Insbesondere die Aufzeichnung derartig erzeugter Stereobilder mit einem handelsüblichen Videorekorder ist über dieses System sehr aufwendig. Entweder verwendet man hierzu zwei getrennte Videorekorder, welche die beiden Stereo-bilder, die von den Kameras geliefert werden, separat aufzeichnen und bei der Wiedergabe aufwendig synchronisiert werden müssen, um für den Betrachter eine dreidimensionale Wahrnehmung zu gewährleisten. Alternativ könnte man die beiden Teilbilder hinter der Umschalteinheit mit Hilfe eines Videorekorders, sequentiell abspeichern, wozu jedoch ein Videorekorder erforderlich wäre, der größte Datenmengen extrem schnell verarbeitet.

Eine weitere gattungsgemäße Vorrichtung ist aus der US-Patentschrift US 4 562 463 bekannt. Die Signale der stereoskopischen Teilbilder werden in den verschiedenen beschriebenen Ausführungsformen in eine jeweils unterschiedliche Anzahl von Speichern eingelesen und anschließend alternierend auf einem Display dargestellt. Der Stereoeindruck für den Beobachter resultiert wiederum aus der geeigneten Zuordnung der jeweiligen Stereo-Bilder zum richtigen Auge mittels bekannter Flüssigkristallanordnungen, die entsprechend zum Auslesen der Speicher synchronisiert werden.
Das als "Methode I" in dieser Patenschrift beschriebene Verfahren sieht hierbei zwei Speicher A und B vor, in die die stereoskopischen Teilbilder eingelesen werden. Sobald das linke stereoskopische Teilbild in Speicher A eingelesen wurde, erfolgt das Einlesen des rechten Teilbildes. Zeitgleich mit dem Einlesen des rechten Teilbildes wird das zwischengespeicherte linke Teilbild zweimal ausgelesen, d.h. aufeinanderfolgend zwei linke Teilbilder auf dem Display dem Beobachter dargeboten usw. . Aufgrund des erforderlichen zweimaligen Darstellens jeweils eines Stereo-Teilbildes während des Einlesens des anderen Teilbildes wird so eine Bildwechselfrequenz erreicht, die für den Beobachter in einem Flimmer-Eindruck resultiert.
Die als "Methoden II und III" beschriebenen Verfahren sehen jeweils drei oder vier seperate Speicher vor, aus denen synchronisiert ausgelesen werden muß, d.h. es ist bei diesen beiden Verfahren desweiteren ein gewisser Umrüstaufwand für ein herkömmliches TV-System erforderlich.

Es ist daher Aufgabe der vorliegenden Erfindung, ein handelsübliches TV-Gerät mit geringem Aufwand derart zu modifizieren, daß eine dreidimensionale Darstellung von Bildern möglich ist. Insbesondere soll dabei eine flimmerfreie Darstellung der dreidimensionalen Bilder gewährleistet sein. Ferner soll mit Hilfe eines derart umgerüsteten Gerätes eine möglichst wenig aufwendige Aufzeichnung und Wiedergabe der dreidimensionalen Bilder über einen handelsüblichen Videorekorder realisierbar sein.

Diese Aufgabe wird gelöst durch eine Vorrichtung mit den Merkmalen des Anspruches 1 und ein Verfahren mit den Merkmalen des Anspruchs 11. Der Oberbegriff basiert auf JP-A-2-288 587.
Erfindungswesentlich gegenüber dem zitierten Stand der Technik ist die sequentielle Verarbeitung der beiden separaten stereoskopischen Teilbilder in einer einzigen Verarbeitungseinheit, wobei nach Zwischenspeicherung der jeweiligen stereoskopischen Teilbilder die Bildwiedergabe auf einem geeigneten Wiedergabemonitor mit der doppelten Einlesefrequenz erfolgt. Die beiden stereoskopischen Teilbilder werden über eine Eingangsschnittstelle mit parallelen Eingängen und eine Umschalteinheit abwechselnd auf eine Verarbeitungseinheit durchgeschaltet. Im Gegensatz zur zitierten deutschen Patentschrift DE 38 08 969 ist demzufolge in der erfindungsgemäßen Vorrichtung nur eine einzige Verarbeitungseinheit für beide Teilbilder erforderlich, was den Umrüstaufwand für ein derartiges System drastisch reduziert bzw. vereinfacht. Die Umschalteinheit wird von einer Synchronisiereinheit mit der entsprechenden Frequenz gesteuert. Die stereoskopischen Teilbilder werden mit Hilfe der Verarbeitungseinheit in einen Teilspeicher eingelesen, der jeweils für eine der beiden Kameras vorgesehen ist. Hierbei ist neben der im folgenden beschriebenen Ausführungsform, in der die Teilspeicher als physikalisch getrennte Speichereinheiten vorliegen, auch eine Ausführungsform möglich, bei der lediglich eine logische Trennung eines Teilspeichers in zwei weitere Teilspeicher erfolgt. Dies kann beispielsweise durch zeitlich alternierendes Einlesen der Kamerasignale in einen einzigen Speicher realisiert werden sowie entsprechend alternierendes Auslesen dieses Speichers. Das Einlesen der Teilbilder in den physikalisch oder logisch richtigen Speicherteil wird ebenfalls von der Synchronisiereinheit gesteuert. Die Zwischenspeicherung der beiden stereoskopischen Halbbilder erfolgt in einer bevorzugten Ausführungsform in zwei handelsüblichen Halbbildspeichern, d.h. zur Umrüstung eines kommerziellen TV-Gerätes ist u.a. lediglich die Ergänzung um einen zweiten Halbbildspeicher erforderlich. Die in den Halbbildspeichern zwischengespeicherten stereoskopischen Teilbilder werden anschließend mit der doppelten Bildfrequenz ausgelesen, weiterverarbeitet und auf dem Wiedergabemonitor dargestellt. Hierzu sind keinerlei Veränderungen an den handelsüblichen Halbbildspeichern erforderlich, die bereits dafür ausgelegt sind, gleichzeitig ein- und ausgelesen zu werden. Aufgrund dieser Wahl der verwendeten Speicherelemente und der entsprechenden Signalverarbeitung ist insbesondere eine noch höhere Bildwechselfrequenz für die beiden stereoskopischen Teilbilder als bei "Methode I" in der zitierten US 4 562 463 möglich, wo noch kein gleichzeitiges Ein- und Auslesen der verwendeten Speicher vorgesehen war. Es resultiert mit einer höheren Bildwechselfrequenz der beiden stereoskopischen Teilbilder demzufolge ein flimmerfreies Stereo-Bild für den Beobachter. Gegenüber den erwähnten "Methoden II und III" der US 4 562 463 verringert sich der erforderliche Umrüstaufwand, da innerhalb der erfindungsgemäßen Vorrichtung lediglich zwei Teilspeicher erforderlich sind.
Die erforderliche Synchronisiereinheit steuert weiterhin die Stereobilderkennung für den Beobachter, indem bei einer möglichen Ausführungsform eine Brille mit ferroelektrischen Flüssigkristallblenden derart geschaltet wird, daß dem jeweiligen Betrachterauge das jeweils richtige Teilbild zugeordnet wird. In einer weiteren Ausführungsform ist es möglich, vor dem Wiedergabemonitor einen schaltbaren Polarisationsfilter anzuordnen, der ebenfalls von der Synchronisiereinheit geschaltet wird. Hierbei trägt der Beobachter eine Polarisationsbrille, die für jedes Auge eine unterschiedliche Polarisations-Transmissionscharakteristik besitzt.

Zur Umrüstung eines handelsüblichen TV-Gerätes ist demzufolge neben einem zweiten Halbbildspeicher lediglich eine Synchronisiereinheit sowie eine Umschalteinheit mitsamt Eingangsschnittstelle erforderlich. Diese Komponenten lassen sich ohne Schwierigkeiten in einem handelsüblichen TV-Gerät unterbringen.

Die erfindungsgemäße Vorrichtung gewährleistet desweiteren eine einfache Aufzeichnung der stereoskopischen Teilbilder mit einem ebenfalls handelsüblichen Videorekorder. So werden die beiden Teilbilder hinter der Umschalteinheit sequentiell aufgezeichnet, wobei die Synchronisiereinheit die Kennsignale für das jeweilige Links- oder Rechtsbild liefert, die ebenfalls vom Videorekorder mit aufgezeichnet werden. Bei der Wiedergabe des aufgezeichneten Stereobildes steuern die aufgezeichneten Kennsignale die Synchronisiereinheit, die dann mit der richtigen Umschaltfrequenz die Umschalteinheit bzw. das Ein- und Auslesen aus den Speicherelementen steuert. Als weiterer Vorteil der erfindungsgemäßen Vorrichtung ist zu erwähnen, daß sich ein derart modifiziertes TV-Gerät jederzeit alternativ in der herkömmlichen Betriebsart betreiben läßt, wobei zwischen verschiedenen Betriebs-Modi umgeschaltet werden kann. Desweiteren ist es möglich, die erfindungsgemäße Vorrichtung für alle gängigen Fernsehnormen, z.B. PAL, NTSC oder SECAM, auszulegen.

Weitere Vorteile und Merkmale der erfindungsgemäßen Vorrichtung ergeben sich aus der nachfolgenden Beschreibung zweier Ausführungsbeispiele sowie der prinzipiellen Signalverarbeitung anhand der beigefügten Zeichnungen.

Dabei zeigt
- Figur 1 und 2: jeweils eine schematische Darstellung eines Ausführungsbeispieles der erfindungsgemäßen Vorrichtung;
- Figur 3: die grundsätzliche Signalverarbeitung innerhalb der erfindungsgemäßen Vorrichtung.

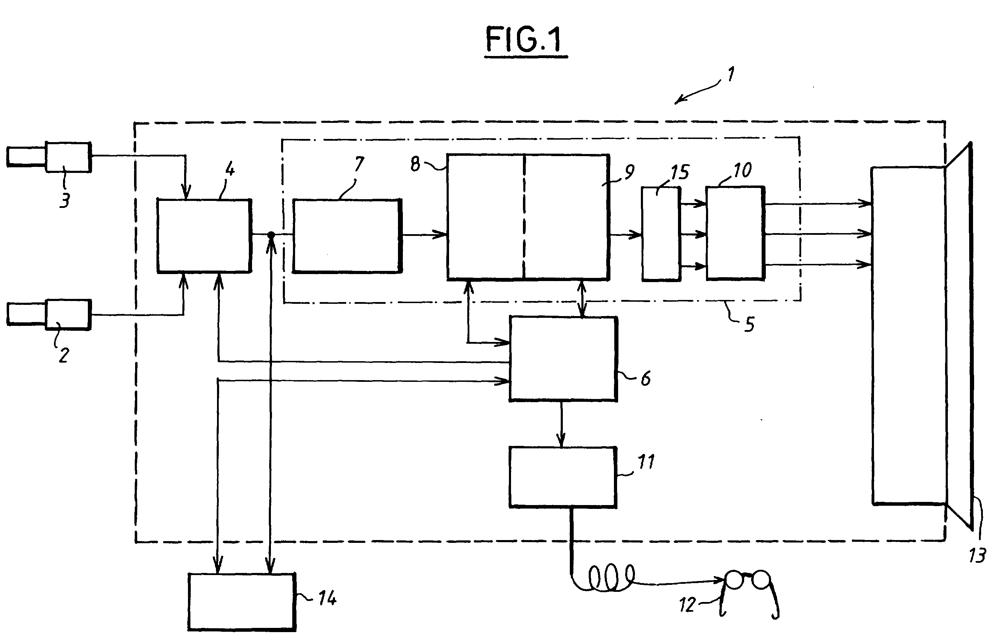

Anhand von Figur 1 erfolgt die Beschreibung eines ersten Ausführungsbeispieles der erfindungsgemäßen Vorrichtung. Es sei an dieser Stelle noch einmal darauf hingewiesen, daß die erfindungsgemäße Vorrichtung auf einem handelsüblichen TV-Gerät basiert, das sich nach geringfügigen Modifikationen zur Darstellung dreidimensionaler Bilder umrüsten läßt. Hierfür geeignet ist beispielsweise das GRUNDIG-Farbfernsehgerät 100 IDTV. Im Ausführungsbeispiel aus Figur 1 symbolisiert die gestrichelt eingezeichnete Linie das TV-Gerät (1). Die Anordnung der erfindungswesentlichen Komponenten ist hierin schematisch dargestellt.

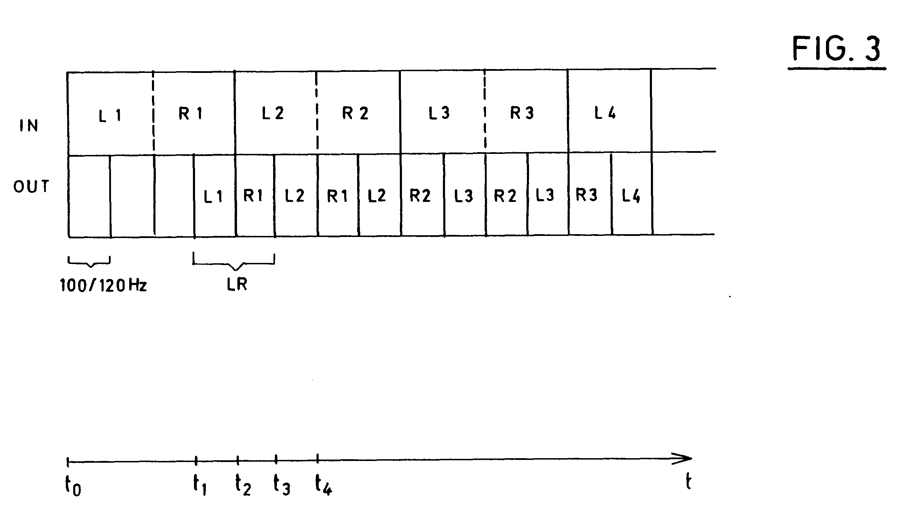

Die stereoskopischen Teilbilder werden in diesem Ausführungsbeispiel von zwei herkömmlichen Kameras (2, 3) geliefert, beispielsweise CCD-Kameras oder auch Vidikons, denen das modifizierte TV-Gerät (1) nachgeordnet ist. Genauso ist es jedoch auch möglich, derartige stereoskopische Teilbilder zu übertragen und mit Hilfe der erfindungsgemäßen Vorrichtung darzustellen. Die Umschalteinheit (4) sorgt dafür, daß die von den Kameras (2, 3) gelieferten stereoskopischen Teilbilder wechselweise auf die nachfolgende Verarbeitungseinheit (5) durchgeschaltet werden. Im dargestellten Ausführungsbeispiel besitzt die Umschalteinheit (4) eine Eingangsschnittstelle mit parallelen Eingängen für beide Kameras (2, 3). Es sei noch einmal betont, daß die Anordnung der Umschalteinheit (4) vor der eigentlichen Verarbeitungseinheit (5) als erfindungswesentlich im Hinblick auf die sequentielle Signalverarbeitung erforderlich ist. Die Frequenz des wechselweisen Durchschaltens der Umschalteinheit (4) wird von einer zentralen Synchronisiereinheit (6) gesteuert, die desweiteren die gesamte Signalverarbeitung für die beiden Teilbilder entsprechend synchronisiert und mit der Stereobilderkennung korreliert. Diese zentrale Synchronisiereinheit (6) ist ebenfalls als weitere Ergänzung eines handelsüblichen TV-Gerätes erforderlich. Der Umschalteinheit (4) nachgeordnet ist die erwähnte Verarbeitungseinheit (5), wo die weitere Verarbeitung der Teilbilder erfolgt. Mit Hilfe eines herkömmlichen Farbencoders (7) werden die gelieferten Signale der Teilbilder anschließend in üblicher Weise farbcodiert. Diese Farbcodierung erfolgt hierbei aufgrund der sequentiellen Bildverarbeitung mit einem einzigen Farbencoder (7), d.h. zur Umrüstung eines handelsüblichen TV-Gerätes ist kein zweiter derartiger Farbencoder (7) erforderlich. Die Verdopplung der Bild- und Vertikalfrequenz des Eingangssignales zur Realisierung eines flimmerfreien dreidimensionalen Bildes erfolgt anschließend mit Hilfe zweier Halbbildspeicher (8, 9). Die vom Farbencoder (7) gelieferten Signale werden wechselweise in zwei handelsübliche Halbbildspeicher (8, 9) eingelesen, wobei jedem Teilbild ein bestimmter Halbbildspeicher (8, 9) zugeordnet ist. Als Ergänzung eines handelsüblichen TV-Gerätes ist ein zweiter Halbbildspeicher zusätzlich zum bereits vorhandenen erforderlich. Das Auslesen der zwischengespeicherten Halbbilder aus den beiden Halbbildspeichern (8, 9) und die abwechselnde Darstellung auf dem Wiedergabemonitor (13) erfolgt nun mit der doppelten Frequenz wie das Einlesen über die Umschalteinheit (4). Diese Auslesefrequenz, mit der die beiden Teilbilder auf dem Wiedergabemonitor (13) dargestellt werden, sollte hierbei oberhalb der kritischen Augenfrequenz von 45 Hz liegen, um für den Betrachter ein flimmerfreies Bild zu liefern. Zur Verdopplung der Einlesefrequenz mit Hilfe der beiden konventionellen Halbbildspeicher (8, 9) sind keinerlei Modifikationen an den Halbbildspeichern (8, 9) erforderlich, da diese in modernen TV-Systemen für das Auslesen mit einer Bildfrequenz von 100/120 Hz ausgelegt sind. Hierfür können beispielsweise Halbbildspeicher der Firma NEC mit der Typenbezeichnung MYPD 41264 C-12 verwendet werden. Insbesondere ermöglichen derartige Halbbildspeicher (8, 9) das gleichzeitige Ein- und Auslesen von Signalen, so daß im Gegensatz zu DE 38 08 969 ein Halbbildspeicher pro Kamera ausreicht, aus dem auch während eines Einlesevorganges Signale ausgelesen werden können. Durch das gleichzeitige Ein- und Auslesen der Halbbildspeicher (8, 9) wird ferner erreicht, daß trotz der nur zwei vorhandenen Halbbildspeicher, auf dem Wiedergabemonitor (13) die Bildfolge "..rechtes Teilbild, linkes Teilbild, rechtes Teilbild usw..." dargestellt werden kann, was bei ausreichend hoher Bildwechselfrequenz die Voraussetzung für ein flimmerfreies Stereobild für den Beobachter ist. Die Signalverarbeitung wird anhand von Fig. 3 im folgenden noch näher erläutert.

Das Einlesen der beiden Teilbilder in den jeweils richtigen Halbbildspeicher (8, 9) wird von der erwähnten Synchronisiereinheit (6) gesteuert, welche die Frequenz der Umschalteinheit (4) mit der Einlesefrequenz, sowie der Auslesefrequenz synchronisiert.

Die derart verarbeiteten Teilbilder gelangen anschließend auf die Endstufe des TV-Gerätes. Dabei werden in einem herkömmlichen Farb-Decoder (15) die Farbdifferenzsignale des Farbencoders (7) in die üblichen RGB-Signale umgewandelt und über eine RGB-Endstufe (10) auf dem Wiedergabemonitor (13) dargestellt.

Für den Betrachter ergeben sich bei einer derartigen Signalverarbeitung zwei Bilder auf dem Wiedergabe-monitor (13), die mit hoher Bildwechselfrequenz alternierend dargestellt werden. Dabei entsprechen die beiden Teilbilder den von den beiden Kameras (2, 3) aufgenommenen Bildern. Um ein dreidimensionales Bild wahrzunehmen muß nun dafür gesorgt werden, daß dem jeweiligen Betrachterauge das richtige Teilbild der entsprechenden Kamera (2, 3) zugeführt wird. Im dargestellten Ausführungsbeispiel wird dies mit Hilfe einer LC-Brille (12) erreicht, bei der ferroelektrische Flüssigkristalle vor denbeiden Augen mit der Bildwechselfrequenz zwischen geöffnet und geschlossen umgeschaltet werden. Beim Darstellen des linken Kamera-Teilbildes wird die rechte Blende auf geschlossen geschaltet und umgekehrt. Derartige LC-Brillen werden von der Firma STEREOGRAPHICS unter der Typenbezeichnung CES-1 vertrieben. Die Steuerung der LC-Brille (12) mit der entsprechenden Bildwechselfrequenz erfolgt über die Synchronisiereinheit (6), bzw. die nachgeordnete Brillensteuerung (11).

Neben dem vereinfachten Aufbau bietet die erfindungsgemäße Vorrichtung eine einfache Möglichkeit dreidimensionale Bilder ,mit Hilfe eines handelsüblichen Videorekorders aufzuzeichnen bzw. wiederzugeben. Zur Aufzeichnung werden die gelieferten Teilbilder der beiden Kameras (2, 3) hinter der Umschalteinheit (4) in sequentieller Folge vom Videorekorder (14) aufgezeichnet. Die Teilbilder werden demzufolge nacheinander in den jeweiligen Datenspeicher des Videorekorders (14) eingelesen. Um bei der Wiedergabe die eindeutige Rechts-, Linkszuordnung der abgespeicherten Teilbilder sicherzustellen wird bei der Aufzeichnung jedes Teilbild zusammen mit einem Kennsignal abgespeichert. Dieses Kennsignal für die Links-, Rechtserkennung wird dabei von der Synchronisiereinheit (6) geliefert. Bei der Wiedergabe der abgespeicherten dreidimensionalen Bilder werden die mit den Teilbildern abgespeicherten Kennsignale zur externen Synchronisierung der Synchronisiereinheit (6) herangezogen. Die abgespeicherten Teilbilder werden hierzu vom Videorekorder (14) vor der Verarbeitungseinheit (5) eingelesen und in der vorher beschriebenen Art und Weise weiter verarbeitet. Die Aufzeichnung und Wiedergabe dreidimensionaler Bilder ist über die erfindungsgemäße Vorrichtung demzufolge mit Hilfe eines handelsüblichen Videorekorders möglich, ohne daß Modifikationen an demselben erforderlich sind.

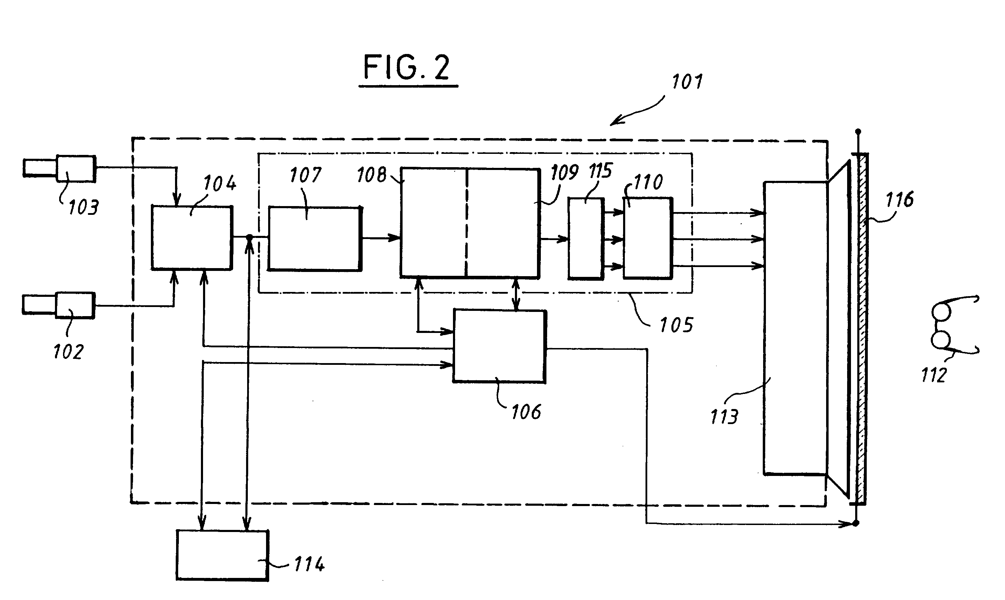

In Figur 2 ist ein zweites Ausführungsbeispiel der erfindungsgemäßen Vorrichtung dargestellt. Die Verarbeitung der von zwei Kameras (102, 103) gelieferten stereoskopischen Teilbilder erfolgt hierbei analog zum ersten beschriebenen Ausführungsbeispiel. So werden die stereoskopischen Teilbilder mit Hilfe der Umschalteinheit (104) wechselweise auf die Verarbeitungseinheit (105) durchgeschaltet. Dort erfolgt hinter dem Farbencoder (107) das entsprechende Einlesen in die beiden Halbbildspeicher (108, 109), die Frequenzverdopplung beim Auslesen und die Weiterverarbeitung in Farb-Decoder (115) und RGB-Endstufe (110). Die Darstellung der beiden Teilbilder geschieht mit Hilfe eines Wiedergabemonitors (113). Die Synchronisation von Umschalteinheit (104), Ein- und Auslesen der jeweiligen Halbbildspeicher (108, 109) übernimmt wie im ersten Ausführungsbeispiel die zentrale Synchronisiereinheit (106). Die Aufzeichnung und Wiedergabe dreidimensionaler Bilder über einen handelsüblichen Videorekorder (114) ist analog zum ersten beschriebenen Ausführungsbeispiel möglich.

Unterschiedlich zum ersten beschriebenen Ausführungsbeispiel wird hier jedoch die dreidimensionale Wahrnehmung für den Beobachter realisiert. So ist vor dem Wiedergabemonitor (113) ein schaltbares Polarisationsfilter (116) angeordnet, das die gesamte Fläche des Wiedergabemonitors abdeckt. Dieses Polarisationsfilter (116) wird mit der Bildwechselfrequenz von der Synchronisiereinheit (106) zwischen zwei unterschiedlichen Polarisationszuständen hin- und hergeschaltet und übernimmt damit die Funktion eines schaltbaren Shutters. Ein derartiges Polarisationsfilter wird beispielsweise von der Firma TEKTRONIX unter der Typenbezeichnung SGS 625 vertrieben. Der Betrachter trägt eine Polarisations-Brille (112) mit Gläsern unterschiedlicher Transmissionscharakteristik, wobei diese den Transmissionscharakteristiken des Polarisationsfilters (116) vor dem Wiedergabemonitor (113) entsprechen. Somit ist gewährleistet, daß jedem Auge das Teilbild der entsprechenden Kamera (102, 103) zugeordnet wird und so eine dreidimensionale Wahrnehmung möglich ist.

Anhand von Fig. 3 wird im folgenden die prinzipielle Signalverarbeitung innerhalb der erfindungsgemäßen Vorrichtung beschrieben. Dargestellt sind hierbei die an den Ein- (IN) und Ausgängen (OUT) der beiden verwendeten Halbbildspeicher anliegenden Signale der beiden stereoskopischen Teilbilder Ln und Rn der nacheinander erfaßten Stereobilder, die in zeitlicher Folge verarbeitet werden. Sämtliche linken Teilbilder Ln werden hierbei in einen ersten Halbbildspeicher eingelesen, die rechten Teilbilder Rn in einen zweiten Halbbildspeicher, wobei die beiden Halbbildspeicher nicht dargestellt sind. Nach dem Einlesen des ersten Teilbildes Ll in den ersten Halbbildspeicher beginnt während des Einlesens des rechten Teilbildes R1 in den zweiten Halbbildspeicher zum Zeitpunkt tl das Auslesen des linken Teilbildes L1 aus dem ersten Halbbildspeicher, dem anschließend zum Zeitpunkt t2 das Auslesen des rechten Teilbildes R1 aus dem zweiten Halbbildspeicher folgt. Anschließend wird zum Zeitpunkt t3 bereits mit dem Auslesen des linken Teilbildes L2 des zweiten Stereobildes begonnen, obwohl dieses Teilbild L2 noch nicht komplett in den ersten Halbbildspeicher eingelesen ist. Dies ist nur aufgrund der erfindungsgemäßen Wahl der verwendeten Halbbildspeicher möglich, die das gleichzeitige Ein- und Auslesen derartiger Speicherbausteine erlauben. Nach dem Auslesen des Teilbildes L2 erfolgt zum Zeitpunkt t4 das nochmalige Auslesen des Teilbildes R1, während mit dem Einlesen des linken Teilbildes R2 des zweiten Stereobildes in den zweiten Halbbildspeicher begonnen wird usw.
Die Signalverarbeitung nach diesem Verfahren und die daraus resultierende Bildwechselfrequenz der Stereo-Teilbilder LR gewährleistet einen flimmerfreien StereoEindruck für den Beobachter, da dem Beobachter mit einer Bildfolgefrequenz von 100 bzw. 120 Hz alternierend rechte und linke stereoskopische Teilbilder dargeboten werden.

Eine mögliche Verwendung findet die erfindungsgemäße Vorrichtung beispielsweise in der Medizin, wo Operationen mit Hilfe zweier Kameras aufgezeichnet und über die erfindungsgemäße Vorrichtung in realistischer, dreidimensionaler Wahrnehmung betrachtet werden können. So bietet sich die Verwendung in der Endoskopie an, wo damit eine dreidimensionale Darstellung der betrachteten Körperteile möglich ist. Jedoch sind für die erfindungsgemäße Vorrichtung vielfältigste weitere Einsatzmöglichkeiten gegeben, wo eine preisgünstige Realisierung eines 3-D-Wiedergabesystemes erforderlich ist.

## Patentansprüche

1. Vorrichtung zur Darstellung von dreidimensionalen Bildern umfassend
- eine Eingangsschnittstelle mit einem ersten Eingang für Signale linker stereoskopischer Teilbilder und mit einem zweiten Eingang für Signale rechter stereoskopischer Teilbilder,
- eine der Eingangsschnittstelle nachgeordnete Schalteinheit (4; 104),
- eine Verarbeitungseinheit (5; 105) mit einem den linken Teilbildern zugeordneten Halbbildspeicher (8; 108) sowie mit einem den rechten Teilbildern zugeordneten Halbbildspeicher (9; 109), wobei die Halbbildspeicher (8, 9; 108, 109) so angeordnet sind, daß sie bereits während des Einlese vorgangs wieder ausgelesen werden und daß somit mit der doppelten Einlesefrequenz ausgelesen wird und abwechselnd das linke und rechte Teilbild dargestellt wird,
- einen Wiedergabe-Monitor (13; 113),
- eine durchschaltbare Blende (12; 116) und
- eine Synchronisiereinheit (6; 106) zur Synchronisierung der Halbbildspeicher (8, 9; 108, 109),
dadurch gekennzeichnet, daß die Schalteinheit (4; 104) eine Umschalteinheit (4; 104) ist, welche zwischen dem ersten Eingang für die Signale der linken stereoskopischen Teilbilder und dem zweiten Eingang für die Signale der rechten stereoskopischen Teilbilder umschaltet und abwechselnd den ersten Eingang oder den zweiten Eingang auf die Verarbeitungseinheit (5; 105) durchschaltet, und daß die Synchronisiereinheit auch die Umschalteinheit (4; 104) und die Blende (12; 116) synchronisiert.

2. Vorrichtung nach Anspruch 1, dadurch gekennzeichnet, daß die Teilspeicher als zwei logisch getrennte Speichereinheiten (8, 9; 108, 109) ausgeführt sind, in die Signale einlesbar und gleichzeitig auslesbar sind.

3. Vorrichtung nach Anspruch 2, dadurch gekennzeichnet, daß die Teilspeicher als zwei separate, physikalisch getrennte Speichereinheiten (8, 9; 108, 109) ausgeführt sind, in die Signale einlesbar und gleichzeitig auslesbar sind.

4. Vorrichtung nach Anspruch 3, dadurch gekennzeichnet, daß die Synchronisiereinheit (6; 106) das alternierende Einlesen der stereoskopischen Teilbilder in die jeweils zugeordnete Speichereinheit (8, 9; 108, 109) durch die entsprechende Steuerung der Umschalteinheit (4; 104) gewährleistet und das alternierende Auslesen der Speichereinheiten (8, 9; 108, 109) mit der doppelten Einlesefrequenz sowie die Stereobilderkennung für den Beobachter steuert.

5. Vorrichtung nach Anspruch 4, dadurch gekennzeichnet, daß die den stereoskopischen Teilbildern zugeordneten Speichereinheiten (8, 9; 108, 109) jeweils als handelsübliche Halbbildspeicher ausgeführt sind, die gleichzeitig ein- und auslesbar sind.

6. Vorrichtung nach mindestens einem der vorangehenden Ansprüche, dadurch gekennzeichnet, daß vor den Augen des Beobachters elektrooptische FlüssigkristallBlenden (12) angeordnet sind, die als durchschaltbare Blenden dienen.

7. Vorrichtung nach mindestens einem der vorangehenden Ansprüche, dadurch gekennzeichnet, daß als durchschaltbare Blende (12; 115) ein vor dem Wiedergabe-Monitor angeordneter Schatter (115) dient, der elektrooptisch zwischen zwei durchgelassenen Transmissionszuständen schaltbar ist, während der Betrachter gleichzeitig eine Polarisationsbrille (112) mit entsprechender Transmissionscharakeristik für die beiden Augen trägt.

8. Vorrichtung nach mindesten einem der Ansprüche 1-7, dadurch gekennzeichnet, daß die Vorrichtung auf Basis eines handelsüblichen TV-Gerätes realisierbar und komplett in diesem TV-Gerät unterzubringen ist.

9. Vorrichtung nach mindesten einem der Ansprüche 1-7, dadurch gekennzeichnet, daß die Sychronisiereinheit (6; 106) bei der Aufzeichnung der gelieferten stereoskopischen Teilbilder mit Hilfe eines Videorecorders (14) gleichzeitig ein Kennsignal für das jeweils aufgezeichnete Teilbild liefert.

10. Vorrichtung nach mindestens einem der Ansprüche 1-7, gekennzeichnet durch die alternative Verwendung in herkömmlichen TV-Betrieb, als auch zur Darstellung dreidimensionaler Bilder.

11. Verfahren zum Betrieb einer Vorrichtung nach Anspruch 1 oder einem der folgenden Ansprüche, dadurch gekennzeichnet, daß bereits während des Einlesens eines stereoskopischen Teilbildes aus einem Teilspeicher mit dem Auslesen dieses stereoskopischen Teilbildes begonnen wird.

12. Verfahren nach Anspruch 11, dadurch gekennzeichnet, daß
- ein erstes stereoskopisches Teilbild eines Stereo-Bildes in einen ersten Teilspeicher eingelesen wird,
- das zugehörige stereoskopische zweite Teilbild dieses Stereo-Bildes anschließend in einen zweiten Teilspeicher eingelesen wird,
- noch bevor der Einlesevorgang für das zweite stereoskopische Teilbild beendet ist, mit dem Auslesen des ersten stereoskopischen Teilbildes dieses Stereo-Bildes begonnen wird,
- anschließend das erste stereoskopische Teilbild eines weiteren Stereo-Bildes eingelesen wird,
- zeitgleich mit dem Beginn dieses Einlesevorgangs der Auslesevorgang für das vorher eingelesene stereoskopische Teilbild des vorhergehenden Stereobildes beginnt und
- noch während des Einlesevorganges für das erste stereoskopische Teilbild des weiteren Stereobildes das Auslesen diese stereoskopischen Teilbildes erfolgt, wobei sämtliche Auslesevorgänge mit der mindestens doppelten Einlesefrequenz erfolgen.

## Claims

1. Device for displaying three-dimensional images, comprising
- an input interface with a first input for signals of left stereoscopic sectional images and with a second input for signals of right stereoscopic sectional images,
- a switching unit (4; 104) connected downstream of the input interface,
- a processing unit (5; 105) with a sectional image memory (8; 108) for the left sectional images and with a sectional image memory (9; 109) for the right sectional images, the sectional image memories (8, 9; 108, 109) being arranged so that they are being read out during reading-in and therefore are being read out at twice the frequency of the reading-in with the left and the right sectional image being displayed alternately,
- a display monitor (13; 113),
- a switchable shutter (12; 116), and
- a synchronising unit (6; 106) synchronising the sectional image memories (8, 9; 108, 109),
characterised in
that the switching unit (4; 104) is a switch-over unit which switches over between the first input for the signals of the left stereoscopic sectional images and the second input for the signals of the right stereoscopic sectional images and alternately connects the first input and the second input to the processing unit (5; 105), and
that the synchronising unit synchronises also the switching unit (4; 104) and the shutter (12; 116).

2. Device of claim 1, wherein the sectional image memories are configured as two logically separated memory units (8, 9; 108, 109) into which signals can be read in and simultaneously read out.

3. Device of claim 2, wherein the sectional image memories are configured as two separate, physically partitioned memory units (8, 9; 108, 109) into which signals can be read in and simultaneously read out.

4. Device of claim 3, wherein the synchronising unit (6; 106) ensures the alternate reading-in of the stereoscopic sectional images in the respective memory units (8, 9; 108, 109) by correspondingly controlling the switch-over unit (4; 104), controls the alternate reading-out of the memory units (8, 9; 108, 109) at twice the frequency of the reading-in, and controls perception of the images on the display monitor by a viewer as stereoscopic images.

5. Device of claim 4, wherein the memory units (8, 9; 108, 109) for the stereoscopic sectional images are configured as commercially available subframe memories which can be read in and simultaneously read out.

6. Device according to at least one of the preceding claims, wherein the switchable shutter is configured as electro-optical liquid crystal shutters (12) which are arranged in front of the eyes of the viewer.

7. Device according to at least one of the preceding claims, wherein the switchable shutter (12; 115) is configured as a shutter (115) which is arranged in front of the display monitor and is switchable electro-optically between two passed-through transmission states and wherein polarisation spectacles having a corresponding transmission characteristic for both eyes are worn by the viewer.

8. Device according to at least one of the claims 1 to 7, wherein the device can be realised on the basis of a commercially available TV apparatus and be accommodated completely in this TV apparatus.

9. Device according to at least one of the claims 1 to 7, wherein a video recorder (14) is used for recording the supplied stereoscopic sectional images and the synchronising unit (6; 106) simultaneously supplies an identification signal for each recorded sectional image.

10. Device according to at least one of the claims 1 to 7, wherein the device can be alternatively used for conventional TV-operation and for displaying three-dimensional images.

11. Method for operating a device of one of the claims 1 to 10, characterised by starting to read out a stereoscopic sectional image while reading-in this stereoscopic sectional image.

12. Method of claim 11, characterised in that
- a first stereoscopic sectional image of a stereo image is read into a first sectional image memory,
- thereafter, the second stereoscopic sectional image of this stereo image is read into a second sectional image memory,
- reading-out the first stereoscopic sectional image of the stereo image is started before the read-in operation of the second stereoscopic sectional image is completed,
- thereafter, the first stereoscopic sectional image of a further stereo image is read in,
- simultaneously with the start of this read-in operation, reading-out of the stereoscopic sectional image previously read-in of the previous stereo image is started, and
- the first stereoscopic sectional image of the further stereo image is read out while reading-in this stereoscopic sectional image, wherein all read-out operations occur at at least twice the read-in frequency.

## Revendications

1. Dispositif pour la représentation d'images tridimensionnelles comprenant
- une interface d'entrée avec une première entrée de signaux correspondant à des images stéréoscopiques gauches et une seconde entrée de signaux correspondant à des images stéréoscopiques droites,
- une boîte de commutation (4; 104) disposée en aval de ladite interface d'entrée,
- une unité de traitement (5; 105) avec une mémoire d'images (8; 108) associée aux images stéréoscopiques gauches et une mémoire d'images (9; 109) associée aux images stéréoscopiques droites, où lesdites mémoires d'images (8, 9; 108, 109) sont disposées de manière à ce que leur contenu soit ressorti déjà pendant l'opération d'entrée et à ce que la sortie s'effectue à la double fréquence d'entrée avec une représentation en alternance des images stéréoscopiques gauche et droite,
- un écran de visualisation (13; 113),
- un diaphragme commutable (12; 116) et
- une unité de synchronisation (6; 106) assurant la synchronisation des mémoires d'images (8, 9; 108, 109).
caractérisé en ce que la boîte de commutation (4; 104) est de type à commuter entre la première entrée de signaux correspondant aux images stéréoscopiques gauches et la seconde entrée de signaux correspondant aux images stéréoscopiques droites et à mettre en communication en alternance la première et la seconde entrée avec l'unité de traitement (5; 105), et que l'unité de synchronisation synchronise également la boîte de commutation (4; 104) et le diaphragme (12; 116).

2. Dispositif selon la revendication 1, caractérisé en ce que les deux mémoires partielles sont exécutées sous forme de deux unités de mémorisation (8, 9; 108, 109) logiquement séparées qui autorisent l'entrée et la sortie simultanée des signaux.

3. Dispositif selon la revendication 2, caractérisé en ce que les mémoires partielles sont exécutées sous forme de deux unités de mémorisation (8, 9; 108, 109) séparées et physiquement distinctes qui autorisent l'entrée et la sortie simultanée des signaux.

4. Dispositif selon la revendication 3, caractérisé en ce que l'unité de synchronisation (6; 106) assure l'entrée en alternance des images stéréoscopiques dans les unités de mémorisation respectives (8, 9; 108, 109) par un pilotage correspondant de la boîte de commutation (4; 104) et qu'elle commande la sortie en alternance du contenu des unités de mémorisation (8, 9; 108, 109) à la double fréquence d'entrée et la visualisation des couples stéréoscopiques pour l'observateur.

5. Dispositif selon la revendication 4, caractérisé en ce que les unités de mémorisation (8, 9; 108, 109) associées aux images stéréoscopiques sont exécutées respectivement sous forme de mémoires d'images stéréoscopiques d'usage courant qui autorisent l'entrée et la sortie simultanée de signaux.

6. Dispositif selon l'une au moins des revendications ci-dessus, caractérisé en ce que des diaphragmes à cristaux liquides électro-optiques (12) servant de diaphragmes commutables sont disposés devant les yeux de l'observateur.

7. Dispositif selon une au moins des revendications ci-dessus, caractérisé en ce que le diaphragme commutable (12; 115) est constitué par un obturateur (115) disposé devant l'écran de visualisation qui est commutable par voie électro-optique entre deux états de transmission visualisés à un observateur qui porte des lunettes polarisantes (112) présentant des caractéristiques de transmission correspondantes pour les deux yeux.

8. Dispositif selon l'une au moins des revendications 1 à 7, caractérisé en ce qu'il est réalisable sur la base d'un téléviseur d'usage courant et qu'il peut être logé intégralement dans ledit téléviseur.

9. Dispositif selon l'une au moins des revendications 1 à 7, caractérisé en ce que l'unité de synchronisation (6; 106) fournit au moment de l'enregistrement des images stéréoscopiques délivrées au moyen d'un magnétoscope (14) un signal d'identification de chaque image stéréoscopique enregistrée.

10. Dispositif selon l'une au moins des revendications 1 à 7, caractérisé en ce qu'il est utilisable tant en mode TV normal que pour la visualisation d'images tridimensionnelles.

11. Procédé pour l'exploitation d'un dispositif selon la revendication 1 ou l'une des revendications suivantes, caractérisé en ce que la sortie d'une image stéréoscopique lue dans une mémoire partielle commence déjà pendant l'opération d'entrée.

12. Procédé selon la revendication 11, caractérisé en ce que
- une première image stéréoscopique d'un couple stéréoscopique est lue dans une première mémoire partielle,
- la seconde image stéréoscopique dudit couple stéréoscopique est lue ensuite dans une seconde mémoire partielle,
- la sortie de la première image stéréoscopique du couple stéréoscopique commence avant même que l'opération d'entrée de la seconde image stéréoscopique ne soit terminée,
- à cela suit l'entrée de la première image stéréoscopique d'un autre couple stéréoscopique,
- cette entrée commence en même temps que l'opération de sortie de l'image stéréoscopique du couple stéréoscopique précédent qui a été entrée précédemment et que
- l'opération de sortie de cette image stéréoscopique est exécutée pendant l'entrée de la première image stéréoscopique de l'autre couple stéréoscopique, toutes les opérations de sortie d'effectuant au moins à la double fréquence d'entrée.
